# FASCICULE DE BREVET EUROPEEN

(11) **EP 1 535 561 B1**
(45) Date de publication et mention de la délivrance du brevet: **27.02.2008**
(21) Numéro de dépôt: 04356173.7
(22) Date de dépôt: 29.10.2004
(51) Int. Cl.: A47L 9/12

(54) **Dispositif de séparation des déchets pour aspirateur**
Abfalltrennvorrichtung für Staubsauger
Waste separating device for vacuum cleaner

(30) Priorité: 27.11.2003 FR 0313914
(43) Date de publication de la demande: 01.06.2005
(73) Titulaire: SEB S.A., 69130 Ecully (FR)
(72) Inventeur: David, fabien, 27940 Notre Dame de l'Isle (FR)
(74) Mandataire: Kiehl, Hubert

(56) Documents cités:
- GB-A- 2 384 451
- US-A- 5 271 750
- US-A1- 2003 182 756
- PATENT ABSTRACTS OF JAPAN vol. 2000, no. 01, 31 janvier 2000 (2000-01-31) & JP 11 290724 A (NAGANO YOJI), 26 octobre 1999 (1999-10-26)

## Description

La présente invention concerne les appareils récupérateurs de déchets de type aspirateurs, et plus particulièrement ceux utilisant une séparation des déchets par centrifugation.

L'un des objets de la présente invention est une amélioration des dispositifs de séparation des déchets utilisant une chambre de séparation de forme généralement cylindrique, où l'air est mis en rotation et sort de ladite chambre par des orifices ménagés dans un conduit au centre de la chambre.

Le document FR 2 786 682 décrit un tel appareil. Le conduit central est percé d'une multitude de trous en périphérie, l'axe de ces ouvertures étant sensiblement radial: Un bac de récupération des déchets est disposé sous le conduit central et vient fermer la chambre de séparation.

Ainsi, lorsque le groupe d'aspiration principal est mis en marche, les déchets sur le sol à nettoyer sont aspirés à l'aide d'un conduit terminé généralement par un suceur et relié à la chambre de séparation. Le flux d'air chargé de déchets pénètre alors à l'intérieur de la chambre de séparation selon une direction tangentielle.

Les déchets les plus lourds sont alors séparés du flux d'air principal, par effet centrifuge, mais également par la barrière constituée par le conduit troué. Ces déchets tombent alors dans le bac de stockage.

Il est également connu, par la demande WO 03/047412 au nom du déposant, un dispositif de séparation des déchets comprenant un conduit d'entrée d'air débouchant selon une direction tangentielle dans une chambre de séparation des déchets définissant un volume interne ayant sensiblement la forme d'un cylindre.

Une des particularités de cette invention concerne cette chambre de séparation cylindrique qui comporte notamment une grille de séparation également cylindrique en partie centrale. Cette grille sépare la chambre d'un conduit en liaison avec le groupe d'aspiration, ledit conduit comportant notamment un groupe de filtration.

La chambre possède par ailleurs un canal d'évacuation des déchets selon une direction radiale, ledit canal étant relié à un bac étanche collecteur des déchets centrifugés. Ce canal d'évacuation pourrait également être disposé selon une direction tangentielle.

De façon analogue au document décrit précédemment, lorsque le groupe d'aspiration principal est mis en marche, le flux d'air chargé de déchets pénètre à l'intérieur de la chambre de séparation avec une vitesse élevée obtenue par la configuration dimensionnelle des différentes parties du dispositif et notamment la faible section de passage au niveau de la chambre de séparation.

Les déchets les plus lourds sont alors séparés du flux d'air principal, par effet centrifuge, mais également par la grille cylindrique. Ils pénètrent alors dans le bac étanche par le canal d'évacuation.

Un tel dispositif présente une séparation des déchets relativement bonne, compte tenu de la vitesse élevée de l'air dans la chambre de séparation et du fait que l'air aspiré, pénétrant dans la chambre tangentiellement à la grille cylindrique, doit passer au travers des ouvertures ménagées dans ladite grille cylindrique, ce qui implique un changement de direction proche d'un quart de tour en moyenne.

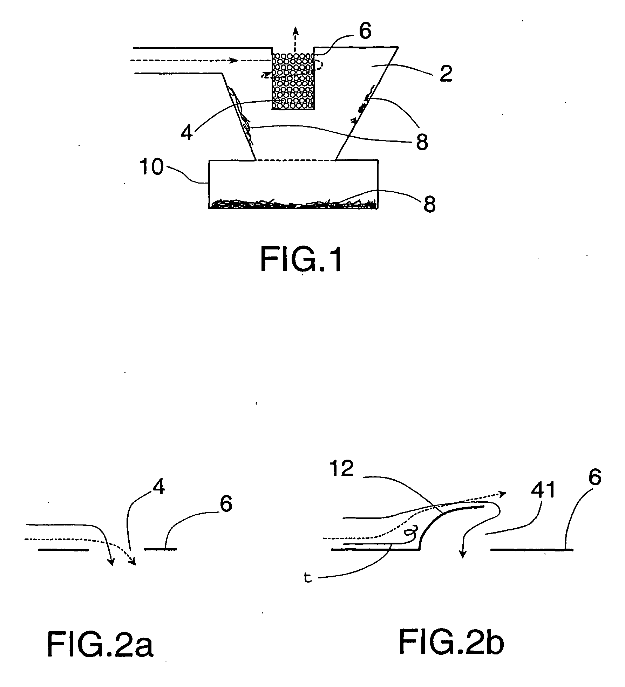

Une amélioration d'un dispositif de séparation tel qu'il vient d'être décrit est dévoilée par le document JP11290724 où, selon l'une des versions de réalisation, les trous du conduit central sont masqués par des parois en forme de quart de sphère. Les figures 1, 2a et 2b annexées illustrent la progression de l'état de la technique. La figure 1 montre le principe d'une chambre de séparation par centrifugation, où l'air entre tangentiellement dans une chambre 2 de séparation et est forcé à pénétrer dans une multitude d'orifices 4 percés dans un conduit central 6. Les déchets 8 séparés tombent alors dans un bac 10.

La figure 2a montre les trajectoires de l'air, en trait plein, et de certaines particules en trait pointillé au niveau d'une ouverture 4 du séparateur présenté figure 1. Tel qu'il est visible sur cette figure, l'air pénètre dans l'ouverture 4 en inclinant sa trajectoire d'environ 90°. Les particules les plus lourdes, de par leur vitesse, ne peuvent incliner leur trajectoire. De plus, par l'effet centrifuge, ces particules sont déplacées vers la périphérie de la chambre cylindrique de séparation où elles sont récupérées dans un réceptacle 10.

Certaines particules, et notamment les plus légères, restent à proximité des ouvertures 4 et peuvent pénétrer dans ces ouvertures en inclinant légèrement leur trajectoire, telle que représentée en pointillés figure 2a.

Ainsi, un tel séparateur trouve ses limites par ce phénomène, les particules les plus fines étant mal séparées.

La figure 2b présente l'amélioration de ce dispositif décrit dans l'une des variantes de réalisation du dispositif de séparation présenté dans le document JP11290724. Selon ce schéma simplifié, le dispositif présente des parois 12 en quart de sphère masquant les ouvertures 41 suivant le sens de rotation de l'air. Ainsi, par la présence de ces parois, les particules les plus fines sont orientées vers la périphérie de la chambre de séparation et prennent ainsi une trajectoire les éloignant des ouvertures, telle que représenté par le trait pointillé. Globalement, le pouvoir de séparation du dispositif est augmenté.

Toutefois, le trajet de l'air est plus tortueux pour pénétrer dans les ouvertures 41 puisque l'air est obligé de modifier sa trajectoire d'environ 180° pour pénétrer dans le conduit 6. Ceci entraîne des pertes de charge supplémentaires conséquentes, nécessitant alors des moto-ventilateurs beaucoup plus puissants, donc plus coûteux.

Par ailleurs, la forme de la paroi 12, en incluant un angle droit à sa base avec le conduit 6, génère des phénomènes de turbulence t qui altèrent la séparation des particules. On redoute qu'il ne se créé alors des zones d'accumulation de poussières agglomérées pouvant devenir des sièges de développement bactérien non désirés.

Un autre dispositif de séparation et de collecte des déchets entrainés par un flux d'air est décrit dans le document GB-A-2 384 451.

La présente invention vise à améliorer notamment la séparation des déchets au sein d'un dispositif à séparation centrifuge, sans augmentation de l'encombrement du dispositif, et sans augmentation des pertes de charge, à l'aide de moyens peu coûteux.

La présente invention est atteinte à l'aide d'un dispositif de séparation et de collecte des déchets selon la revendication 1.

La présence de parois obliques au niveau des ouvertures du conduit éloignent les particules du conduit d'aspiration de l'air. Toutefois, la présence d'ouvertures sur ces parois en leur extrémité minimise les pertes de charge en facilitant le passage de l'air dans le conduit. Une telle solution permet donc d'associer l'effet de tremplin pour les particules, occasionné par les parois, à une certaine facilité de l'air pour pénétrer dans le conduit.

En effet, chaque ouverture se comporte comme un petit séparateur à part entière du fait de sa capacité à séparer les trajectoires des particules de l'air. La multiplicité des ouvertures permet de réduire les vitesses d'air au niveau de chaque ouverture ce qui limite les pertes de charge sans pour autant réduire l'efficacité de centrifugation qui est liée d'une part à la vitesse de l'air mais également au rayon de courbure de la trajectoire de l'air. En réduisant significativement le rayon de courbure comme c'est le cas ici, on peut donc obtenir une bonne performance de centrifugation tout en limitant les pertes de charge.

Avantageusement, les parois sont bordées, de part et d'autre, de flancs latéraux prenant appui sur le conduit. La présence de ces flancs évite que les particules passent à coté des parois inclinées et ne pénètrent dans les ouvertures des conduits en réalisant, en quelques sorte, un court-circuit aéraulique. La séparation des particules s'en trouve améliorée.

La géométrie des parois inclinées est définie également de telle sorte qu'elles ne se chevauchent pas les unes des autres afin de ne pas créer de zones mortes où la poussière parviendrait à s'accumuler. Ainsi on conserve un léger flux d'air circulant de chaque coté desdites parois sans pour autant pénétrer directement dans les ouvertures grâce à la présence des flancs latéraux.

Préférentiellement les trous sont disposés en quinconce pour une meilleure couverture sur la hauteur du conduit dans le sens perpendiculaire au sens de passage F de l'air.

Selon une variante de réalisation, les ouvertures au niveau du conduit sont allongées dans le sens de rotation de l'air, de manière à dépasser l'aplomb des parois inclinées. Cette disposition permet de limiter davantage les pertes de charge principalement en augmentant la surface de passage de l'air ce qui diminue localement sa vitesse.

Des essais expérimentaux montrent que les meilleurs résultats sont obtenus pour une inclinaison des parois comprise entre 10° et 35° par rapport au conduit.

Selon l'une des mises en oeuvre préférée de l'invention, le dispositif de séparation et de collecte des déchets comporte au moins 500 parois inclinées qui sont autant de séparateurs de particules.

D'autres essais portant sur la taille des ouvertures ont montré qu'une ouverture des parois de diamètre inférieure à 2,5 mm et préférentiellement égale à 1,5 mm donnait les meilleurs résultats.

L'un des modes préféré de réalisation de l'invention consiste à présenter la chambre cylindrique de séparation sous la forme d'un tore dont la face cylindrique intérieure définit le conduit en liaison avec le groupe d'aspiration. Cette disposition permet de délimiter facilement la chambre de séparation, les déchets étant expulsés vers un réceptacle annexe.

Avantageusement, la section diamétrale du tore est comprise entre une fois et quatre fois la plus petite section des canaux d'amenée des déchets depuis le suceur, permettant de garder une vitesse d'air importante, tout en gardant une allure compacte au système.

Selon cette réalisation, le dispositif principal de séparation et de collecte des déchets comporte un second moyen de filtration sous la forme d'un filtre disposé dans un logement situé sous la chambre de séparation et en communication aéraulique avec celle-ci. Une telle disposition permet de simplifier l'architecture de l'appareil tout en offrant une plus grande latitude quant à la réalisation du filtre. Ce dernier peut être un filtre plissé, permettant d'augmenter sa surface de séparation et de retarder ainsi le colmatage dudit filtre. Un tel ensemble permet d'avoir un système compact dont l'efficacité de filtration peut atteindre des niveaux dits « HEPA » selon le pouvoir de filtration dudit filtre plissé.

La présente invention sera mieux comprise à l'aide de la description qui va suivre, en référence aux figures annexées, parmi lesquelles :
- les figures 1, 2a et 2b présentent l'état de l'art,
- la figure 2c est un schéma explicatif de la présente invention,
- la figure 3 est un détail agrandi du dispositif principal de séparation selon l'invention,
- la figure 4 est une vue schématique d'un premier mode de réalisation de la présente invention,
- la figure 5 montre un aspirateur équipé de la présente invention, selon un second mode de réalisation,
- la figure 6 représente le dispositif selon son second mode de réalisation, dans une vue partiellement éclatée,
- la figure 7 est une vue détaillée d'un élément constitutif du dispositif de séparation, dans une vue en perspective,
- la figure 8 représente le même élément que la figure 7, dans une vue de face,
- la figure 9 est une vue de l'élément représenté à la figure 8, selon la coupe A-A de cette même figure,
- la figure 10 représente le détail B de la figure 9.

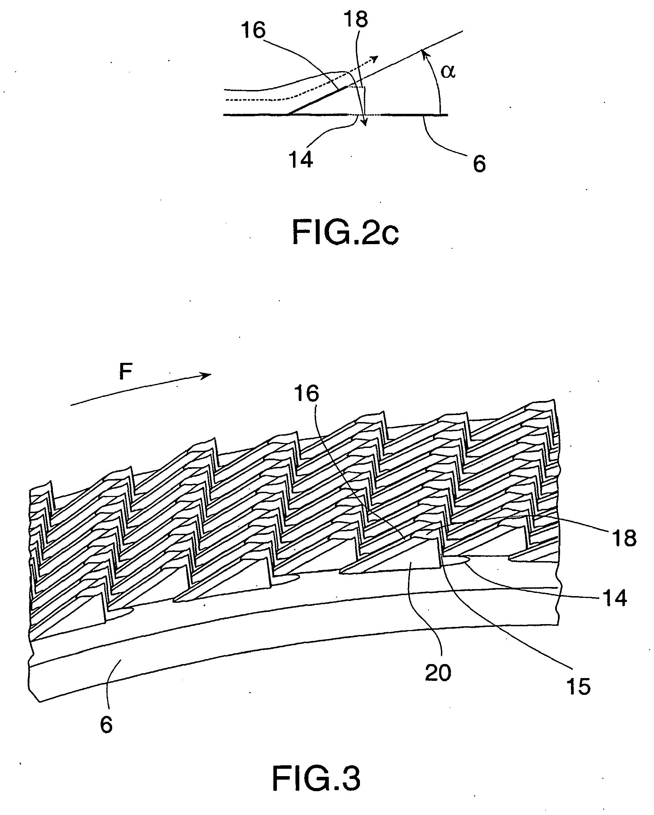

En référence à la figure 2c, et comparativement aux figures 1, 2a et 2b précédemment commentées, la présente invention se caractérise par la présence, sur le conduit 6 d'évacuation de l'air, au niveau des ouvertures 14 du conduit, de parois inclinées 16 prenant appui sur ledit conduit et présentant un angle α avec ce même conduit. Ces parois sont inclinées dans le sens de rotation de l'air introduit dans la chambre.

Par ailleurs, ces parois présentent, en leur extrémité libre, une ouverture 18 sensiblement plane et sensiblement parallèle au conduit à cet endroit. Cette ouverture 18 est en liaison aéraulique avec l'ouverture 14, ces deux ouvertures étant à l'aplomb l'une de l'autre.

Par cette disposition, la trajectoire des particules les plus fines, représentée par le trait pointillé, suit la paroi inclinée et s'éloigne ainsi du conduit. Les particules sont en quelque sorte éjectées par le tremplin formé par les parois inclinées 16.

Cependant, par l'ouverture 18 réalisée dans la paroi, ouverture sensiblement parallèle au conduit sous-jacent, l'air peut rejoindre le conduit d'évacuation sans avoir à modifier considérablement sa trajectoire. Le trait plein symbolisant le trajet de l'air montre que la sortie de l'air au travers du conduit est facilitée par la présence des ouvertures 18, sans dégrader sensiblement la séparation des particules.

Selon ce mode de réalisation, les pertes de charge sont minimisées en augmentant la taille des ouvertures au niveau du conduit. Ainsi, tel qu'il est visible sur la figure 2c, mais également sur la figure 3, les ouvertures 14 se prolongent en avant des parois inclinées, ce qui permet à l'air d'atteindre ces ouvertures en courbant moins sa trajectoire, ce qui signifie donc des pertes de charge réduites.

Cette augmentation des ouvertures doit toutefois demeurer faible, afin de ne pas offrir un passage facilité pour les particules. Cet aspect résulte donc d'un compromis entre la diminution des pertes de charge et la diminution de l'efficacité de séparation.

La figure 3 présente un dispositif concret de séparation des déchets basé sur le principe exposé précédemment. Ainsi, le conduit 6 est de forme cylindrique et comporte, sensiblement sur toute sa hauteur, une multitude de trous 14 de passage de l'air.

Selon le sens F de passage de l'air, des parois 16 sont disposées devant chaque ouverture 14. Ces parois inclinées présentent en leur extrémité libre une ouverture 18 en liaison avec les ouvertures 14 par le bord libre frontal 15. Avantageusement, les parois 16 comportent des flancs latéraux 20 prenant appui sur le conduit 6 et évitant que les particules pénètrent dans les ouvertures 14 en contournant les parois inclinées 16. Ces flancs constituent donc des bords longitudinaux des parois inclinées. En protégeant ainsi les ouvertures 14 et en multipliant les parois inclinées, les particules sont forcées sur lesdites parois où elles sont projetées à distance des ouvertures 14.

Il est remarquable de constater que l'agencement rapproché des ouvertures 14, des parois 16 et des flancs 20 constituent de véritables séparateurs de particules à part entière.

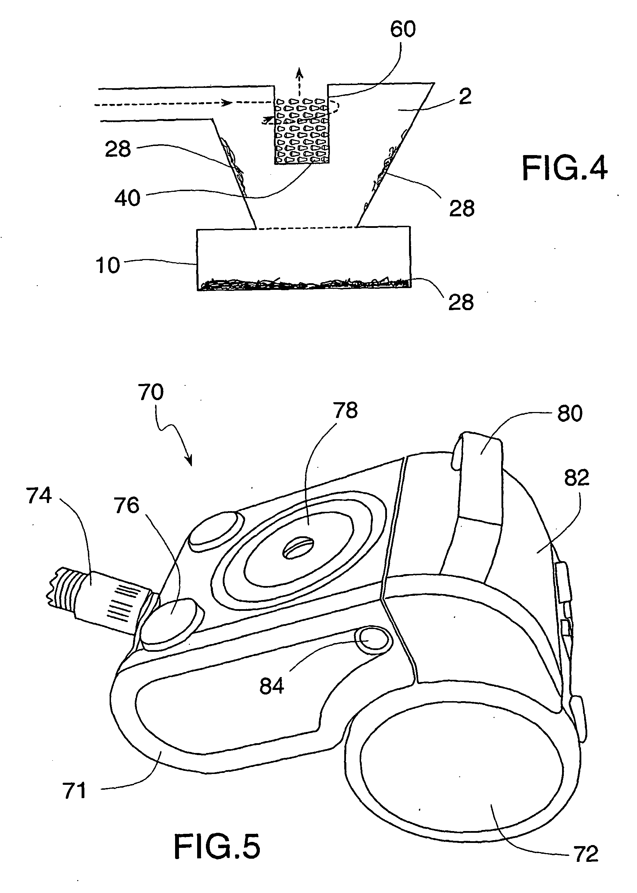

La figure 4 montre, dans une vue analogue à la figure 1, un schéma de principe d'un séparateur centrifuge comportant un dispositif de séparation conforme à la présente invention.

Ce dispositif comprend une chambre de séparation 2 au centre de laquelle est disposée un conduit 60 relié au groupe moto-ventilateur de l'aspirateur. La chambre est par ailleurs reliée à un bac 10 collecteur des déchets séparés par le dispositif. Selon l'invention, le conduit 60 comporte une multitude de séparateurs 40 tels que précédemment mentionnés, chaque séparateur étant alors défini comme la réunion d'une paroi inclinée 16 associée à deux flancs latéraux 20, et d'une ouverture 14 ménagée sur le conduit 60, à l'aplomb de la paroi inclinée.

Ainsi, l'air chargé de déchets récoltés sur le sol à nettoyer pénètre dans la chambre de séparation 2 de manière tangentielle. Cet air doit pénétrer dans le conduit 60. Il suit alors les parois 16 des séparateurs 40 où les déchets 28 sont séparés, y compris les particules fines, tel que précédemment expliqué à la figure 2c. Les déchets 28 ainsi séparés sont ensuite accompagnés par l'air et tombent ensuite par gravité dans le bac collecteur 10.

Les figures 5 et suivantes illustrent un second mode de mise en oeuvre de l'invention. La figure 5 illustre d'une manière générale un aspirateur comportant le dispositif de séparation selon l'invention.

Un tel aspirateur 70 comporte un corps 71 reposant sur plusieurs roues dont notamment deux roues arrière 72. Un raccord aéraulique 74 relie le corps de l'appareil à un suceur en contact avec la surface à nettoyer et permettant l'introduction des déchets dans le corps de l'appareil. Ce dernier est pourvu d'un groupe moto-ventilateur, non représenté, permettant de générer un flux d'air apte à récolter les déchets souillant la surface à nettoyer. Un bouton 76 permet la mise en marche et l'arrêt du moteur.

La chambre de séparation comportant le dispositif de séparation selon l'invention est accessible par un couvercle de protection 78. Les déchets séparés par le dispositif sont évacués vers un bac 82 facilement accessible par l'utilisateur et présentant une poignée de préhension 80. Cette poignée fait également office de poignée de transport de l'appareil, l'inclinaison globale de l'appareil et la présence de cette poignée en position haute favorisant sa préhension tout en évitant un mouvement de basculement de l'appareil au niveau de son centre de gravité. Un bouton 84 de déblocage du bac 82 est prévu sur le côté de l'appareil. Avantageusement, un tel bouton de déverrouillage est présent de chaque côté de l'appareil.

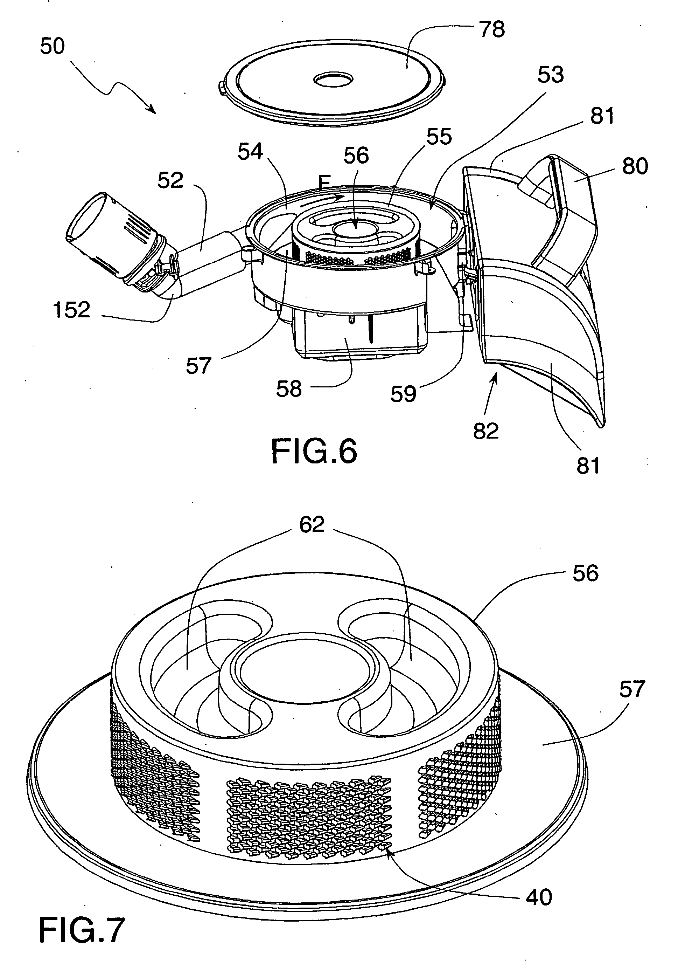

Tel que détaillé figure 6, le dispositif de séparation 50 des déchets comporte un conduit d'entrée d'air 52 débouchant dans une chambre de séparation 53 s'apparentant à un tore de section diamétrale rectangulaire. Avantageusement, le conduit d'entrée d'air 52 comporte un coude 152 permettant de réduire la probabilité pour que certains déchets n'aillent directement percuter le conduit central.

La section de passage du flux dans la chambre est délimitée par une paroi circulaire extérieure 54, une paroi circulaire intérieure 55, une paroi supérieure qui est le couvercle 78, ainsi qu'une paroi de fond 57.

La paroi circulaire intérieure définit le conduit 56 d'évacuation de l'air. Ce conduit est fermé en partie haute et est en liaison aéraulique avec un compartiment 58 comportant un filtre, de préférence un filtre plissé. Ce compartiment est également en liaison aéraulique avec le groupe moto-ventilateur. Une telle configuration permet d'avoir plus de latitude quant au dimensionnement du filtre.

Ce mode de mise en oeuvre de l'invention présente également l'avantage de clairement mettre en évidence la faible hauteur de la chambre de séparation par rapport au conduit 52 d'entrée des déchets. La section de la chambre de séparation reste dans un rapport de 1 à 4 fois la plus petite section d'amenée des déchets depuis le suceur, tel qu'enseigné par la demande WO 03/047412. Bien entendu des moyens d'étanchéité sont prévus pour éviter toute fuite d'air au niveau de la chambre de séparation.

Conformément à l'invention, et tel que bien visible figure 7, le conduit 56 présente une multitude de séparateur 40 tels que précédemment définis. Ces séparateurs sont répartis selon 6 secteurs équivalents, chaque secteur comportant, selon l'exemple proposé, 136 séparateurs, soit donc au total 816 séparateurs de particules, ce qui est considérable compte tenu du faible encombrement du dispositif.

Selon l'exemple proposé, la taille des ouvertures au niveau des parois inclinées 16 est de l'ordre de 1,5 mm, l'angle des parois avec le conduit est de 30° environ, la longueur de chaque paroi est de 1,8 mm. Le diamètre du conduit 56 est de 106 mm.

La figure 7 montre également que le conduit 56 et la paroi de fond 57 ne forment qu'une seule pièce, ce qui évite notamment les problèmes d'étanchéité à ce niveau.

Par ailleurs, l'extrémité haute fermée du conduit 56 comporte deux empreintes 62 symétriques en arc de cercle permettant la préhension du dispositif de séparation par l'utilisateur en évitant les zones en contact avec la poussière que sont les parois du conduit et la paroi de fond 57.

La sortie des déchets séparés dans la chambre de séparation 53 est assurée par une ouverture sensiblement radiale ménagée dans la paroi circulaire 54 de la chambre de séparation, cette ouverture débouchant sur le bac récupérateur 82 par l'intermédiaire d'un conduit court 59. Ce bac est amovible de la chambre de séparation et peut recouvrir plusieurs modes de réalisation. Selon l'exemple proposé, le bac peut être vidé par l'un ou l'autre de ses cotés latéraux, ces derniers étant chacun obstrué par un couvercle 81 amovible. Cette disposition permet à tout à chacun, qu'il soit droitier ou gaucher, de pouvoir vider le bac facilement.

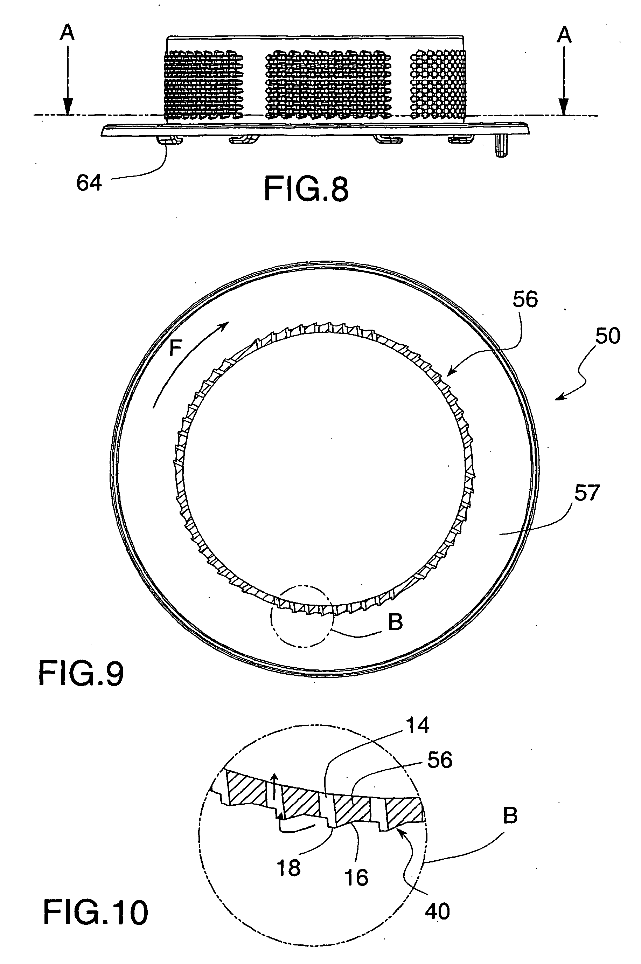

Les figures 8, 9 et 10 présentent, en détail, le conduit 56 et les séparateurs 40. Sur la figure 8 sont notamment présentés des encoches 64 de maintien du compartiment 58, ce dernier étant en effet amovible du conduit afin de pouvoir facilement nettoyer le filtre logé dans ledit compartiment.

Tel qu'il est bien visible sur le détail B de la coupe A-A du conduit 56, chaque séparateur comporte une paroi inclinée 16 à l'extrémité de laquelle est ménagée une ouverture 18, le conduit 56 comportant par ailleurs une ouverture 14 s'étendant en aval de la paroi 16, selon le sens de déplacement général F du flux d'air dans la chambre de séparation.

En fonctionnement, l'utilisateur met en marche le groupe d'aspiration principal, et aspire les déchets sur le sol à nettoyer à l'aide d'un conduit terminé ou non par un suceur et relié à la chambre de séparation 53 par le conduit 52. Le flux d'air chargé de déchets pénètre alors à l'intérieur de la chambre de séparation selon la direction F avec une vitesse proche de 60 m/s et pouvant atteindre 100 m/s par endroit, vitesse élevée obtenue par la configuration dimensionnelle des différentes parties du dispositif.

Les déchets les plus lourds sont alors séparés du flux d'air principal, par effet centrifuge. De plus, par les séparateurs 40 du conduit 55, les particules fines sont également séparées du flux d'air. Ces déchets pénètrent alors, par le conduit 59, dans le bac de collecte 82 où ils sont stockés.

L'air pénètre alors, par les ouvertures 18 puis 14, à l'intérieur du conduit 56 où il est filtré par le filtre contenu dans le compartiment 58. Ce filtre permet une filtration élevée afin d'arrêter les poussières les plus fines. L'air épuré est alors dirigé vers le groupe d'aspiration.

D'autres variantes de réalisation peuvent être apportées à la présente invention. Il est notamment possible, de configurer les ouvertures 14, non pas en les allongeant dans le sens de rotation de l'air, mais en les allongeant dans le sens perpendiculaire à l'écoulement, ce qui évite d'augmenter la possibilité qu'une particule ne puisse incurver sa trajectoire pour pénétrer dans l'ouverture, tout en augmentant la taille des ouvertures de passage de l'air.

La présente invention offre donc un système éminemment compact sans altérer la qualité de filtration qui nécessite d'une part des vitesses d'air élevées, qualité essentiellement réalisée par le maintien d'une vitesse importante dans la chambre de séparation, et d'autre part un dispositif efficace de séparation des déchets, dispositif amélioré par rapport à un dispositif à simples trous par la présence des « micro-séparateurs » 40.

## Revendications

1. Dispositif (50) de séparation et de collecte des déchets entraînés par un flux d'air (F) généré par un groupe d'aspiration d'un aspirateur (70), ledit dispositif (50) comprenant un tube d'entrée d'air (52) débouchant selon une direction tangentielle dans une chambre de séparation (2, 53) des déchets (28), dans la partie centrale de ladite chambre (2, 53) est agencé un conduit (6, 56, 60), comportant une pluralité d'ouvertures (14), ledit conduit (6, 56, 60) étant en liaison avec le groupe d'aspiration, ladite chambre (2, 53) étant reliée à un bac (10, 82) collecteur des déchets (28), le conduit (6, 56, 60) comportant des parois inclinées (16) dirigées vers la chambre de séparation (2, 53), dans le sens inverse du mouvement (F) de l'air, **caractérisé en ce que** l'extrémité de chaque paroi (16) comporte une ouverture (18) sensiblement plane et sensiblement parallèle au conduit (6, 56, 60) sous-jacent, et **en ce que** les ouvertures (18) du conduit (6, 56, 60) sont situées à l'aplomb des ouvertures (14) de paroi (16).

2. Dispositif (50) de séparation et de collecte des déchets selon la revendication précédente, **caractérisé en ce que** les parois (16) sont bordées, de part et d'autre, de flancs latéraux (20) prenant appui sur le conduit (6, 56, 60).

3. Dispositif (50) de séparation et de collecte des déchets selon l'une des revendications précédentes, **caractérisé en ce que** les ouvertures (14) au niveau du conduit (6, 56, 60) sont allongées dans le sens de rotation (F) de l'air de manière à dépasser l'aplomb des parois inclinées (16), ou perpendiculairement au sens de rotation (F) de l'air.

4. Dispositif (50) de séparation et de collecte des déchets selon l'une des revendications précédentes, **caractérisé en ce que** les parois (16) sont inclinées d'un angle compris entre 10° et 35° par rapport au conduit (6, 56, 60).

5. Dispositif (50) de séparation et de collecte des déchets selon l'une des revendications précédentes, **caractérisé en ce qu'**il comporte au moins 500 parois inclinées (16).

6. Dispositif (50) de séparation et de collecte des déchets selon l'une des revendications précédentes, **caractérisé en ce que** les ouvertures (18) des parois (16) sont inférieures à 2,5 mm.

7. Dispositif (50) de séparation et de collecte des déchets selon l'une des revendications précédentes, **caractérisé en ce que** la chambre cylindrique (53) de séparation est sous la forme d'un tore dont la face cylindrique intérieure (55) définit le conduit (56) en liaison avec le groupe d'aspiration.

8. Dispositif (50) de séparation et de collecte des déchets selon la revendication précédente, **caractérisé en ce que** la section diamétrale du tore est comprise entre une fois et quatre fois la plus petite section des canaux d'amenée des déchets depuis le suceur.

9. Dispositif (50) de séparation et de collecte des déchets selon l'une des revendications précédentes, **caractérisé en ce qu'**il comporte un second moyen de filtration sous la forme d'un filtre disposé dans un logement (58) situé sous la chambre (53) de séparation et en communication aéraulique avec celle-ci.

10. Dispositif (50) de séparation et de collecte des déchets selon la revendication précédente, **caractérisé en ce que** le second moyen de filtration est un filtre plissé.

## Claims

1. A device (50) for separating and collecting waste entrained by a stream of air (F) generated by a suction unit of a vacuum cleaner (70), said device (50) comprising an air inlet tube (52) opening out in a tangential direction into a separator chamber (2, 53) for separating waste (28), a duct (6, 56, 60) having a plurality of openings (14) being arranged in the central portion of said chamber (2, 53), said duct (6, 56, 60) being in connection with the suction unit, said chamber (2, 53) being connected to a collector vessel (10, 82) for collecting waste (28), the duct (6, 56, 60) including sloping walls (16) directed towards the separator chamber (2, 53) in the direction opposite to the direction of air movement (F), the device being **characterized in that** the end of each wall (16) includes an opening (18) that is substantially plane and substantially parallel to the underlying duct (6, 56, 60), and **in that** the openings (18) in the duct (6, 56, 60) are situated in register with the openings (14) in the wall (16).

2. A device (50) for separating and collecting waste, according to the preceding claim, **characterized in that** the walls (16) are bordered, on either side, by lateral flanks (20) bearing against the duct (6, 56, 60).

3. A device (50) for separating and collecting waste according to either preceding claim, **characterized in that** the openings (14) in the duct (6, 56, 60) are elongate in the air rotation direction (F) in such a manner as to go beyond being in register with the inclined walls (16), or perpendicularly to the air rotation direction (F).

4. A device (50) for separating and collecting waste according to any preceding claim, **characterized in that** the walls (16) are inclined at an angle lying in the range 10° to 35° relative to the duct (6, 56, 60).

5. A device (50) for separating and collecting waste according to any preceding claim, **characterized in that** it includes at least 500 sloping walls (16).

6. A device (50) for separating and collecting waste according to any preceding claim, **characterized in that** the openings (18) in the walls (16) are smaller than 2.5 mm.

7. A device (50) for separating and collecting waste according to any preceding claim, **characterized in that** the cylindrical separation chamber (53) is in the form of a torus having its inside cylindrical face (55) defining the duct (56) in connection with the suction unit.

8. A device (50) for separating and collecting waste according to the preceding claim, **characterized in that** the diametral section of the torque lies in the range one to four times the smallest section of the channels for bringing waste from the suction nozzle.

9. A device (50) for separating and collecting waste according to any preceding claim, **characterized in that** it includes second filter means in the form of a filter disposed in a housing (58) situated under the separation chamber (53) and in air-flow communication therewith.

10. A device (50) for separating and collecting waste according to the preceding claim, **characterized in that** the second filter means is a folded filter.

## Patentansprüche

1. Vorrichtung (50) zum Trennen und Auffangen der Abfälle, die von einem von einer Sauggruppe eines Staubsaugers (70) erzeugten Luftstrom (F) mitgenommen werden, wobei die Vorrichtung (50) ein Lufteinlassrohr (52) aufweist, das gemäß einer Tangentialrichtung in eine Kammer (2, 53) zur Trennung der Abfälle (28) mündet, wobei im mittleren Abschnitt der Kammer (2, 53) eine Leitung (6, 56, 60) mit mehreren Öffnungen (14) angeordnet ist, wobei die Leitung (6, 56, 60) mit der Sauggruppe verbunden ist, wobei die Kammer (2, 53) mit einem Becken (10, 82) zum Auffangen der Abfälle (28) verbunden ist und wobei die Leitung (6, 56, 60) geneigte Wände (16) aufweist, die in zur Luftbewegung (F) entgegengesetzter Richtung zur Trennkammer (2, 53) gerichtet sind, **dadurch gekennzeichnet, dass** das Ende jeder Wand (16) eine im Wesentlichen flache und zur darunter liegenden Leitung (6, 56, 60) im Wesentlichen parallele Öffnung (18) aufweist und die Öffnungen (14) der Leitung (6, 56, 60) senkrecht zu den Öffnungen (18) der Wand (16) liegen.

2. Vorrichtung (50) zum Trennen und Auffangen der Abfälle nach dem vorhergehenden Anspruch, **dadurch gekennzeichnet, dass** die Wände (16) auf der einen und auf der anderen Seite durch seitliche Flanken (20) begrenzt sind, die sich an der Leitung (6, 56, 60) abstützen.

3. Vorrichtung (50) zum Trennen und Auffangen der Abfälle nach einem der vorhergehenden Ansprüche, **dadurch gekennzeichnet, dass** die Öffnungen (14) auf Höhe der Leitung (6, 56, 60) in Drehrichtung (F) der Luft langgestreckt sind, so dass sie die senkrechte Stellung der geneigten Wände (16) überschreiten, oder senkrecht zur Drehrichtung (F) der Luft langgestreckt sind.

4. Vorrichtung (50) zum Trennen und Auffangen der Abfälle nach einem der vorhergehenden Ansprüche, **dadurch gekennzeichnet, dass** die Wände (16) bezüglich der Leitung (6, 56, 60) in einem Winkel zwischen 10° und 35° geneigt sind.

5. Vorrichtung (50) zum Trennen und Auffangen der Abfälle nach einem der vorhergehenden Ansprüche, **dadurch gekennzeichnet, dass** sie mindestens 500 geneigte Wände (16) aufweist.

6. Vorrichtung (50) zum Trennen und Auffangen der Abfälle nach einem der vorhergehenden Ansprüche, **dadurch gekennzeichnet, dass** die Öffnungen (18) der Wände (16) kleiner als 2,5 mm sind.

7. Vorrichtung (50) zum Trennen und Auffangen der Abfälle nach einem der vorhergehenden Ansprüche, **dadurch gekennzeichnet, dass** die zylindrische Trennkammer (53) als Torus ausgebildet ist, dessen zylindrische Innenfläche (55) die Leitung (56) definiert, die mit der Sauggruppe verbunden ist.

8. Vorrichtung (50) zum Trennen und Auffangen der Abfälle nach dem vorhergehenden Anspruch, **dadurch gekennzeichnet, dass** der Durchmesserquerschnitt des Torus zwischen ein und vier Mal so groß ist wie der kleinste Querschnitt der Kanäle zur Zuführung der Abfälle aus der Saugvorrichtung.

9. Vorrichtung (50) zum Trennen und Auffangen der Abfälle nach einem der vorhergehenden Ansprüche, **dadurch gekennzeichnet, dass** sie ein zweites Filtermittel in Form eines Filters aufweist, der in einer Aufnahme (58) angeordnet ist, die unterhalb der Trennkammer (53) liegt und mit dieser luftverbunden ist.

10. Vorrichtung (50) zum Trennen und Auffangen der Abfälle nach dem vorhergehenden Anspruch, **dadurch gekennzeichnet, dass** das zweite Filtermittel ein Faltenfilter ist.
